# EUROPEAN PATENT APPLICATION

(11) **EP 1 717 965 A1**
(43) Date of publication of application: **02.11.2006**
(21) Application number: 05290928.0
(22) Date of filing: 27.04.2005
(51) Int. Cl.: H04B 7/005

(54) **Transmission power control for HSDPA connections**

(71) Applicant: ALCATEL, 75008 Paris (FR)
(72) Inventor: Zeller, Dietrich, 71067 Sinderlfingen (DE); Bakker, Hajo, 71735 Eberdingen (DE); Kaminski, Stephen, 73054 Eislingen (DE); Keil, Klaus, 73730 Esslingen (DE); Braun, Volker, 70178 Stuttgart (DE)
(74) Representative: Richardt, Markus Albert

(57) **Abstract**

The invention relates to wireless communication networks, and to the way in which communication devices choose their transmission power when communicating with each other.

More specifically, the invention relates to a method of controlling the transmission power of a first communication device in a wireless communications network based on the UMTS standard, the first communication device having established a HSDPA connection to a second communication device, whereby the absolute value of the difference between the HSDPA transmission power in a first transmission time interval (tti1) and the HSDPA transmission power in a subsequent second transmission time interval (tti2) is chosen to be smaller than a predetermined value (v).

Furthermore, the invention relates to a node B which can carry out the method mentioned above, and power control means associated with said node B.

## Description

### Field of the invention

The invention relates to wireless communication networks, and to the way in which a base station in UMTS networks, also referred to as node B's, choose the transmission power which is used for the communication from node Bs to user equipments (UE's).

### Background and prior art

The Universal Mobile Telecommunication System (UMTS) is a well known mobile phone technology and is standardized by the 3^{rd} Generation Partnership Project (3GPP). It offers transfer rates with which mobile devices can access the world wide web at speeds deemed to be attractive for the mass market.

The UMTS terrestrial radio access network (UTRAN) consists of radio network controllers (RNC's) and node B's providing coverage for radio cells. In UTRAN it is necessary that all communication devices operate at a minimum transmission power while at the same time maintaining the required signal quality. For that purpose a method called Fast Power Control is used. For existing connections a closed loop is realized in which for each time interval (typically one slot) a control information for the adjustment of the transmission power in the next time interval is added to the data.

HSDPA (high speed downlink packet access) is a mobile telephony protocol designed to offer an increased transfer rate for downlinks in UMTS systems. Instead of permanently adjusting the transmission power the AMC-method is used, in which among other things the modulation scheme, the coding scheme, and the transmission power are adjusted in real-time. For that purpose the user equipments (UE's) measure the signal quality and send channel quality indication reports (CQI's) to the base station, the latter also being referred to as the node B. In HSDPA the node B is responsible for the control of the transmission power of transmissions towards the user equipments.

### Summary of the invention

It is an object of the present invention to provide a method and corresponding devices which provide HSDPA connections with higher transmission efficiencies.

This object and other objects are solved by the features of the independent claims. Further embodiments of the invention are described by the features of the dependent claims. It should be emphasized that any reference signs in the claims shall not be construed as limiting the scope of the invention.

The inventors of the present invention became aware of the fact that CQI reports are not always reliable. CQI reports reflect the quality of a HSDPA connection at a given time, and serve to adjust the HSDPA connection for another given time in the future. In the time interval between these two times the characteristics of the HSDPA connection may have changed. Such a change may however lead to block error rates higher than expected and desired.

It has been found out that one contribution to the above-mentioned unreliability are interferences of signals with themselves, in particular in the case of multipath signals when non-line-of-sight conditions prevail. This interference contribution is severed by the fact that the HSDPA standard allows arbitrary changes of the transmission power between a first tti (transmission time interval) and a subsequent tti. Large transmission power variations are however responsible for an increased contribution of the above interference.

Consequently the invention proposes to limit the transmission power variations in magnitude. Let P1 be the transmission power of a first communication device within a first transmission time interval tti1, and P2 the transmission power of the same communication device within a second and subsequent transmission time interval tti2. Then the absolute value of the difference between these two transmission powers is restricted to be smaller than the predetermined value v : |*P*1 - *P*2| < ν. It is of course equivalent to restrict the ratio P1/P2 to a certain value.

The invention is designed to control the transmission power of a first communication device having established a HSDPA connection to a second communication device. The first communication device may be a node B. In this case the second communication device may be a user equipment, for example a mobile phone or a laptop. If a HSDPA connection is established, the node B communicates with the user equipment, and the node B determines the way in which this is done.

The approach suggested above reduces the variations of the interference level. This amounts to more reliable CQI reports and improved block error rates for all communications between the node B and the user equipments. This applies to both the own and the other radio cells.

Another advantage of the present invention is an advantage felt by standard DCH connections. It has to be borne in mind that a UMTS node B will provide standard DCH connections as well as HSPDA connections at the same time, as these two types of connections will coexist. When spontaneous HSDPA transmissions occurred in the prior art, the signal-to-noise ratio(SNR) for DCH devices decreased. As a consequence the power of the DCH transmissions increased due to the Fast Power Control method mentioned above. This in turn increased the power level further and increased the interference experienced by the HSDPA transmission. After the end of these HSDPA transmissions the SNR of the DCH services, whose transmissions are controlled by the above-mentioned Fast Power Control method, was much too high. As mentioned above the present invention decreases interference effects, which also improves the SNR of standard DCH connections in these cases.

The invention achieves another positive effect in the particular case when a HSDPA transmission is initiated when there is no or only a low prior HSDPA transmission power. As an example the HSDPA transmission power prior to the initialisation of a HSDPA connection might be 0. In this situation the UE measures a good signal quality which might correspond to a CQI value of 14. After starting the HSDPA transmission the measured signal quality might drop significantly and might reach a CQI value of 5. As the transmission of the user data was designed under the assumption of CQI=14, i.e. good quality, resulting in a less robust modulation and coding scheme, the reception is actually made under bad conditions of CQI=5. This will result in a more distorted signal and thus a higher Block Error Rate (BLER) than expected.

On the other hand, if the measurement of a CQI value was performed during a high interference situation caused by a spontaneous transmission of a neighbouring node B, but the actual transmission is performed under low interference e.g. when the neighbouring node B has stopped its transmission, the modulation and coding scheme selected is much too robust for the desired BLER target and thus causes more interference than necessary for all the other communications

That means that due to the delay between the measurement of the radio channel and the actual transmission in combination with the possibility of changing power levels between 0 and 100 percent, the BLER for a transmission is hardly predictable. The effect especially exists for transmissions of user equipments in non-line-of-sight locations. In these cases the constancy and predictability of the block error rate is significantly improved with the invention.

The limitation of the magnitude of the transmission power variations in HSDPA might be performed in several ways. It is generally sufficient to limit the absolute value of the difference P1-P2 of two consecutive tti's. It is however preferred that the two tti's named tti1 and tti2 are next to each other, such that the above mentioned advantages are achieved continuously.

In the prior art the transmission power for HSDPA was allowed to vary between two tti's between 0% and 100% of what is technically possible. According to the invention the variation can be reduced to a fixed amount or to a fixed percentage of the maximum power which is technically possible. In these cases the predetermined value v is a constant. It is however preferred to dynamically adjust this predetermined value v such that it is variable. The advantage is that with a variable predetermined value v the influence of the power difference on the channel quality can be dynamically adapted. One possible implementation is to set v equal to a fixed percentage of e.g. 10% of the preceding power P1. Then the variation P1-P2 from one tti to the next tti may be large if a high absolute power P1 was determined for the previous tti. When the power level P1 was low in the preceding tti, the absolute change of the power level, i.e. P1-P2, for the next tti is low as well. This will result in a steep power decrease for high absolute power levels and a smooth decrease for low absolute power levels.

For a dynamic adjustment of the predetermined value certain values M1, M2, M3 ..Mn of the current HSDPA connection are measured which take the current characteristics of the transmission into account. The measured values are used to dynamically calculate the predetermined value v. This may at least partially be done by means of a computer program which resides in the first communication device, in particular the node B. As it is usual in the prior art this computer program might be stored on a computer readable medium such as a CD or DVD. In the alternative it might be transferred in the form of electric signals carrying the program code via a network such as the internet.

In a preferred embodiment of the invention the first communication device, e.g. the node B, is adapted to send dummy information when its data buffer has a decreasing amount of data, i.e., when it is running out of data. Preferably this decrease is constantly determined, in particular on a tti-to-tti basis. One possibility to do this is
a) to keep the transmission power constant until all data is transmitted,
b) to send dummy information while the transmission power is gradually decreased, and
c) to stop the transmission of dummy information when the transmission power reaches a predefined minimum.

A second possibility to do this is
a) a) to send all available data while gradually decreasing the transmission power
b) to send dummy information after the data buffer is empty while still decreasing the transmission power until the transmission power reaches a minimum value, and then
c) to stop the transmission of dummy information.

These and other aspects of the invention will be apparent from and elucidated with reference to the embodiments described thereafter. It should be noted that the use of reference signs shall not be construed as limiting the scope of the invention.

### Brief description of the drawings:

Fig. 1 shows a UMTS network according to the prior art,
Fig. 2 shows a node B,
Fig. 3 shows transmission power control.

### Detailed description of the drawings and of the preferred embodiments

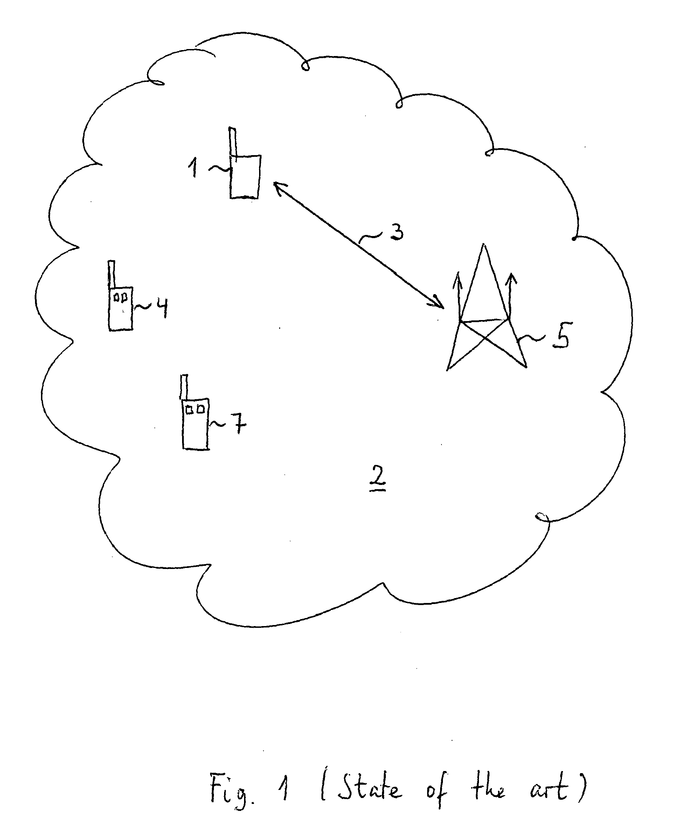

Fig. 1 shows a UMTS network according to the prior art. The network 2 comprises user equipments 1,4 and 7 which may be mobile phones or the like. The node B's communicate with these user equipments via HSDPA connections. As an example node B 5 has established a HSDPA connection 3 with user equipment 1.

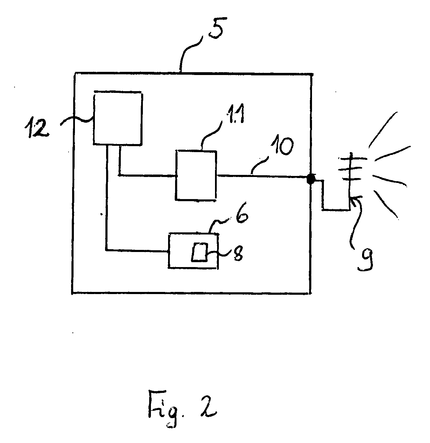

Fig. 2 shows a node B 5 according to the invention. Node B 5 comprises a power amplifier 11 to drive the antenna 9 when being in HSDPA connection to a user equipment. The radio frequency signal, generated by the power amplifier, is flowing from power amplifier 11 via cable 10 to antenna 9. The power of the radio frequency signal is controlled by a scheduler 12. The operation of scheduler 12 is governed by commands from the transmission power control 6. The logic of this power control 6 is a computational entity 8. The man skilled in the art will easily derive that transmission power control 6 may be an external component cooperating with the scheduler 12 as shown in Fig. 2, or may be an internal component of the scheduler 12.

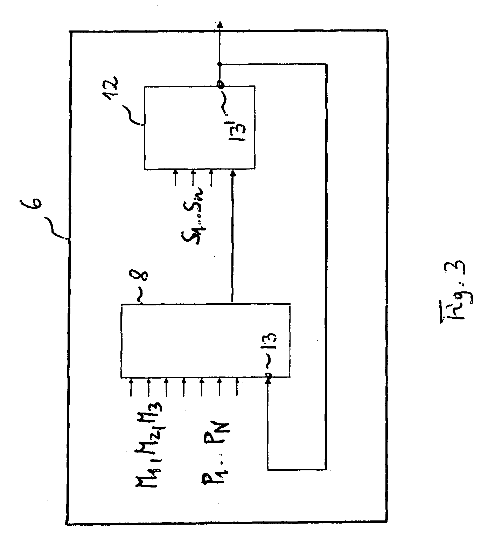

Fig. 3 shows how the power control 6 and the scheduler 12 cooperate. Scheduler 12 receives input parameters S₁, S₂, S_{N}. As it is usual in the prior art, the scheduler receives the values of the following parameters S₁..S_{N}:
■ max_HSDPA_power: the maximum power the node B can provide for a HSDPA connection
■ max_DCH_power: the maximum power the node B can provide for a DCH connection
■ max_overall_power: the maximum overall power the node Bcan provide

According to the invention, the scheduler 12 receives an additional input, namely the value of the parameter HSDPA_power_restriction_for_next_tti, which is the maximum transmission power allowed for the next tti. In this way the HSDPA power for the next tti is limited to a value which is generally smaller than the maximum HSDPA power. Generally HSDPA_power_restriction_for_next_tti = Min (max_HSDPA_power, HSDP A_power _restriction_value).

The algorithm starts with an appropriate initial value of HSDPA_power restriction value, such that HSDPA_power_restriction_for_next_tti is well defined. As will be described below, the parameter HSDPA_power_restriction_value is constantly calculated on the basis of the transmission characteristic, such that HSDPA_power_restriction_for_next_tti is constantly adjusted.

The scheduler 12 uses the value of the parameter HSDPA_power_restriction_for_next_tti for the transmission power of the next tti. As this parameter defines a maximum allowed value, the actual transmission power for the next tti might be smaller. The latter value, which will be called HSDPA_power_of_current_tti, will be measured by appropriate means. HSDPA_power_of_current_tti will be used as an input for the algorithm being carried out by the computational entity 8 for calculating the value of HSDPA_power_restriction_for_next_tti for the next tti as will be described below.

At the beginning, the computational entity 8 has to determine whether the transmission power of the next tti will be
a) smaller than the transmission power of the previous tti,
b) larger than the transmission power of the previous tti,
c) the same as the transmission power of the previous tti.

Accordingly, the scheduler will operate in the ramp-down phase a), the ramp-up phase b), or the steady phase c).

Let the parameter BFS denote the buffer filling status in units of bits, whereby BFS represents the number of bits in the data buffer of the node B. Let the parameter predicted_mean_throughput_per_tti in units of bits/tti denote the predicted mean throughput on the assumption that the mean throughput will be the same as in the past few tti. In this case, the ratio
max number of data tti = BFS /predicted_mean_throughput_per_tti
represents the maximum number of tti's for which data will be present in the buffer on the basis of the above-mentioned predicted mean throughput.

Let the parameter maximum_down_delta_HSDPA_power_per_tti denote the maximum rate in units of watt/tti at which the transmission power is allowed to be decreased in the ramp_down phase. Normally, this parameter will be a constant given by the operator of the node B. Then the parameter
maximum_number_of_power_tti=HSDPA_power_restriction_for_next_tti/maximum_down_delta_HSDPA_power_per_tti
defines the minimum duration of the ramp_down phase (in units of tti) on the basis of the above-mentioned stepwise decrease of the transmission power represented by maximum_down_deita_HSDPA_power_per_tti.

The node B will operate in the ramp_down phase if the ramp_down condition
maximum number of_power tti >= max_number_of_data_tti
is true. This is the case when the time which is needed to decrease the transmission power is larger than the time for which data will be present in the data buffer. In the description which follows this will be called a situation in which the data buffer is close to run out of data until no user data are present anymore. In the alternative it may be called a situation with a demand for decreasing the transmission power.

The node B has to operate in the ramp_up phase b) when the following conditions are satisfied:
i) ramp_down phase is not true, AND
ii) HSDPA_power_of_current_tti >= (HSDPA_power_restriction_value - HSDPA_power_tolerance)

The condition ii) is satisfied when the value of HSDPA_power_of_current_tti, which is the envisaged HSDPA transmission power for the current tti, is larger than or equals the value of HSDPA _power_restriction_value minus the HSDPA_power_toierance. The parameter HSDPA_power_tolerance is a constant value fixed by the operator and acts as a means to enable a power increase although the current power did not fully reach the HSDPA_power_restriction_value. The node B thus operates in the ramp_up phase when the time which is needed to decrease the transmission power is shorter than the time for which data will be present in the data buffer. In this case the node B will have a demand for increasing the transmission power.

The node B operates in the above-mentioned steady phase c) when the node B neither operates in the ramp_up phase, nor in the ramp_down phase. In this case HSDPA_power_of_current_tti remains constant.

For all phases HSDPA_power_restriction_value is less than or equal to max_HSDPA_power.

After determining the mode of operation, namely one of the above-mentioned phases a) to c), the computational entity 8 computes the value of the parameter HSDPA_power_restriction_vaiue for the next tti.

If the scheduler operates in the ramp_down phase a), the scheduler has three alternatives how to gradually decrease the transmission power.

In the first alternative the value of the parameter HSDPA_power_restriction_value is decreased until all data are transmitted. In this way a gradual decrease of the transmission power takes place until the data buffer is empty. If this is the case the transmission power drops to a value of 0. In comparison with the prior art this drop is however less pronounced when the above mentioned stepwise decrease is applied. An additional advantage is that the transmission power is kept to a minimum because the transmission power is set to zero at the end of the transmission. In other words transmission power is only used for the transmission of user data.

In the second alternative the HSDPA transmission power is kept constant until the data buffer runs out of data such that BFS=0. Thus the value of the parameter HSDPA_power_restriction_value is kept constant. Then dummy information is sent while constantly reducing the transmission power for each tti by a constant value. This constant value is defined as maximum_ramp_down_HSDPA_power, and is fixed by the operator. This is done until a minimum HSDPA restriction power is reached. The HSDPA restriction power is defined to be the value minimum_HSDPA_restriction_power, a constant value which has been predefined by the operator. When HSDPA_power_restriction_value = minimum_HSDPA_restriction_power the transmission of dummy information is stopped. The second alternative provides the advantage that the reduced data rate of the last data of the data buffer (of the node B) is not reduced that much. This stems from the fact that the data is transmitted with a decreased data rate due to the reduced transmission power. Furthermore, sending dummy information avoids a sudden drop in the transmission power when the data buffer gets empty.

The third alternative is a combination of the above-mentioned first and second alternative. Thus the value of the parameter HSDPA_power_restriction_value is decreased until all data is transmitted, cf. alternative 1. At the same time, and while HSDPA_power_restriction_value > minimum_HSDPA_restriction_power, the transmission power is gradually decreased by decreasing the value of the parameter HSDPA_power_of_current_tti. The amount by which the transmission power is decreased for each tti is represented by the value of the parameter maximum_ramp_down_HSDPA_power. This is a constant value defined by the operator. Dummy information is sent until HSDPA_power_restriction_value = minimum_HSDPA_restriction_power. Then the transmission is stopped. This approach provides the advantage that an increase of the transmission delay of the last data of the data buffer of the node B is limited because user data is still transmitted with a sufficient data rate. The reduction of the transmission power coincides with a reduction of the transmission of the dummy information only. This means that the reduction of the transmission power only leads to a reduced data rate for the dummy information.

The proper choice of the above-mentioned alternatives depends on the QoS (quality of service) requirements of the service. The first alternative is for example suitable for file downloads and minimizes interference effects as the transmission power is kept to a minimum. The second alternative is particularly suitable for the transfer of videos or movies because the data rate is more constant. A constant data rate avoids that certain video frames are received with a reduced data rate which distorts the visual impression.

If the scheduler operates in the ramp_up phase b), the scheduler increases the value of the parameter HSDPA_power restriction value by maximum_ramp_up_HSDPA_power. In the steady phase c) the value of the parameter HSDPA_power_restriction_value is not changed.

As can be derived from the above explanations, the algorithm being carried out in the computational entity 8 uses the following input:
P1= HSDPA_power tolerance
P2= maximum_down_delta_HSDPA_power_per_tti
P3= maximum_ramp_down_HSDPA_power
P4= maximum ramp up HSDPA_power
P5= minimum_HSDPA_restriction_power

M1= buffer filling status
M2= predicted_mean_throughput_per_tti
M3= max_HSDPA_power

P1, P5 are constant values defined by the operator, whereas M1, M2 and M3 are measured constantly for each tti. For this purpose the node B comprises appropriate measuring means.

In the following two different simulation scenarios are shown which explain the achievements of the present invention.

The scenario consists of only a single UE within a radio cell at a fixed position. Surrounding cells are generating a constant interference level for the radio link between the node B and the UE.

The UE recorded CQI reports in each tti, whereby in a first example the UE is HSDPA-scheduled every tti by the node B. As a consequence the (interference) power level of the own and other cells is constant leading to a constant CQI value of 6. In this case the scheduler tried to adjust the Block Error Rate (BLER) to a predefined operating value of 15%. The simulations actually yielded a BLER of 17,8 %.

In the second case the UE is scheduled only every third tti. Thus the power lever of the own cell varies increased every third tti significantly due to the transmission of HSDPA data. In the ttis between these HSDPA transmissions the power level was kept constant on a low level, i.e., only the CPICH power was present. The HSDPA transmission was based on the most recent CQI report. As the HSDPA transmission of the user data was designed under the assumption of e.g. CQI=13_{,} i.e. good quality, resulting in a less robust modulation and coding scheme, the reception was actually made under bad conditions of CQI=5 In the simulation this resulted in a more distorted signal and thus in a higher Block Error Rate (BLER) than the desired 10%. In the simulation the measured BLER value was 28 %.

By applying the method according to the invention in a third simulation the large variations of the CQI reports as observed in the second case did not occur because e.g. in the tti between the actual data transmission dummy information were sent with about the same power level than used for the data transmission. The CQI report in this case were similar to the first case, thus the CQI values were constant.

### List of reference numerals

- 01: first user equipment
- 02: network
- 03: HSDPA connection
- 04: second user equipment
- 05: node B
- 06: transmission power control
- 07: user equipment
- 08: computational entity
- 09: antenna
- 10: cable
- 11: power amplifier
- 12: scheduler
- 13: port
- 13': port

- tti1: first transmission time interval
- tti2: second transmission time interval
- v: predetermined value
- S1: input parameter
- S2: input parameter
- S2: input parameter
- M1: measured value
- M2: measured value
- M3: measured value
- P1: constant parameter
- P2: constant parameter
- P3: constant parameter
- P4: constant parameter
- P5: constant parameter

## Claims

1. Method of controlling the transmission power of a first communication device (5) in a wireless communications network (2) based on the UMTS standard, the first communication device having established a connection (3) to a second communication device (1,4,7), whereby the absolute value of the difference between a HSDPA transmission power in a first transmission time interval (tti1) and the HSDPA transmission power in a subsequent second transmission time interval (tti2) is chosen to be smaller than a predetermined value (v).

2. Method according to claim 1,
**characterized in that**
the second transmission time interval (tti2) is next to the first transmission time interval (tti1).

3. Method according to claim 1,
**characterized in that**
the predetermined value (v) is dynamically controlled in magnitude.

4. Method according to claim 1,
**characterized in that**
the predetermined (v) value is determined with the help of measured values (M1, M2, M3) of the current HSDPA connection (3).

5. Method according to claim 1,
**characterized in that**
in the case that the first communication device has a data buffer which is close to run out of data until no user data are present anymore all available data is transmitted while at the same time the transmission power is gradually decreased.

6. Method according to claim 1,
**characterized in that**
in the case that the first communication device has a data buffer which is close to run out of data until no user data are present anymore the following steps are carried out:
a) the transmission power is kept constant until all data is transmitted,
b) then dummy information is sent while the transmission power is gradually decreased, and
c) then the transmission of dummy information is stopped when the transmission power reaches a predefined minimum value.

7. Method according to claim 1,
**characterized in that**
in the case that the first communication device has a data buffer which is close to run out of data until no user data are present anymore it
a) gradually decreases the transmission power while sending data, and
b) sends dummy information until the transmission power reaches a predefined minimum value.

8. Method according to claim 1,
**characterized in that**
in the case that the first communication device has a demand for increasing the transmission power the maximum transmission power allowed for the next tti is increased.

9. Method according to claim 1,
**characterized in that**
in the case of a first communication device having neither a demand for reduced transmission power nor a demand for an increased transmission power the maximum transmission power allowed for the next tti is kept constant.

10. Method according to claim 1,
**characterized in that**
the method is at least partially carried out by means of a computer program.

11. Method according to claim 1,
**characterized in that**
the first communication device is a node B, and that the second communication device is a user equipment.

12. Node B for a wireless communication network (2) based on the UMTS standard, the node B (5) having a transmission power control (6) for controlling the HSDPA transmission power when the node B is in HDSPA communication with a user equipment (7),
**characterized in that**
the transmission power control (6) is adapted to establish a difference between the HSDPA transmission power of a first transmission time interval (tti1) and the HSDPA transmission power of a subsequent second transmission time interval (tti2) which is smaller than a predetermined value (v).

13. Node B according to claim 12,
**characterized in that**
the transmission power control (6) comprise a computational entity (8) for calculating the predetermined value (v).

14. Node B according to claim 12 or 13,
**characterized in that**
it is adapted to transmit dummy information when its data buffer is running out of data.

15. Transmission power control for controlling the HSDPA transmission power of a node B (5) in a wireless communication network (2) based on the UMTS standard
**characterized in that**
the transmission power control (6) is adapted to establish a difference between the HSDPA transmission power in a first transmission time interval (tti1) and the HSDPA transmission power in a subsequent second transmission time interval (tti2) which is smaller than a predetermined value (v).

16. Transmission power control according to claim5 or 15,
**characterized in that**
it is adapted to transmit dummy information when its data buffer is gradually emptied.

17. Scheduler for a node B (5) for a wireless communication network (2) comprising a transmission power control according to any of the claims 15 to 16.

## Amended claims

### Amended claims in accordance with Rule 86(2) EPC.

**1.** Method of controlling the transmission power of a first communication device (5) in a wireless communications network (2) based on the UMTS standard, the first communication device having established a connection (3) to a second communication device (1,4,7), whereby the absolute value of the difference between a HSDPA transmission power in a first transmission time interval (tti1) and the HSDPA transmission power in a subsequent second transmission time interval (tti2) is chosen to be smaller than a predetermined value (v).

**2.** Method according to claim 1,
**characterized in that**
the second transmission time interval (tti2) is next to the first transmission time interval (tti1).

**3.** Method according to claim 1,
**characterized in that**
the predetermined value (v) is dynamically controlled in magnitude.

**4.** Method according to claim 1,
**characterized in that**
the predetermined (v) value is determined with the help of measured values (M1, M2, M3) of the current HSDPA connection (3).

**5.** Method according to claim 1,
**characterized in that**
in the case that the first communication device has a data buffer which is close to run out of data until no user data are present anymore all available data is transmitted while at the same time the transmission power is gradually decreased.

**6.** Method according to claim 1,
**characterized in that**
in the case that the first communication device has a data buffer which is close to run out of data until no user data are present anymore the following steps are carried out:
a) the transmission power is kept constant until all data is transmitted,
b) then dummy information is sent while the transmission power is gradually decreased, and
c) then the transmission of dummy information is stopped when the transmission power reaches a predefined minimum value.

**7.** Method according to claim 1,
**characterized in that**
in the case that the first communication device has a data buffer which is close to run out of data until no user data are present anymore it
a) gradually decreases the transmission power while sending data, and
b) sends dummy information until the transmission power reaches a predefined minimum value.

**8.** Method according to claim 1,
**characterized in that**
in the case that the first communication device has a demand for increasing the transmission power the maximum transmission power allowed for the next tti is increased.

**9.** Method according to claim 1,
**characterized in that**
in the case of a first communication device having neither a demand for reduced transmission power nor a demand for an increased transmission power the maximum transmission power allowed for the next tti is kept constant.

**10.** Method according to claim 1,
**characterized in that**
the method is at least partially carried out by means of a computer program.

**11.** Method according to claim 1,
**characterized in that**
the first communication device is a node B, and that the second communication device is a user equipment.

**12.** Node B for a wireless communication network (2) based on the UMTS standard, the node B (5) having a transmission power controller (6) for controlling the HSDPA transmission power when the node B is in HDSPA communication with a user equipment (7),
**characterized in that**
the transmission power control (6) is adapted to establish a difference between the HSDPA transmission power of a first transmission time interval (tti1) and the HSDPA transmission power of a subsequent second transmission time interval (tti2) which is smaller than a predetermined value (v).

**13.** Node B according to claim 12,
**characterized in that**
the transmission power controller (6) comprise a computational entity (8) for calculating the predetermined value (v).

**14.** Node B according to claim 12 or 13,
**characterized in that**
it is adapted to transmit dummy information when its data buffer is running out of data.

**15.** Transmission power controller for controlling the HSDPA transmission power of a node B (5) in a wireless communication network (2) based on the UMTS standard
**characterized in that**
the transmission power controller (6) is adapted to establish a difference between the HSDPA transmission power in a first transmission time interval (tti1) and the HSDPA transmission power in a subsequent second transmission time interval (tti2) which is smaller than a predetermined value (v).

**16.** Transmission power controller according to claim 15,
**characterized in that**
it is adapted to transmit dummy information when its data buffer is gradually emptied.

**17.** Scheduler for a node B (5) for a wireless communication network (2) comprising a transmission power controller according to any of the claims 15 to 16.
